# EUROPÄISCHE PATENTANMELDUNG

(11) **EP 4 570 528 A1**
(43) Veröffentlichungstag der Anmeldung: **18.06.2025**
(21) Anmeldenummer: 24213173.8
(22) Anmeldetag: 15.11.2024
(51) Int. Cl.: B60C 11/16

(54) **FAHRZEUGLUFTREIFEN MIT SPIKES UND VERFAHREN ZU SEINER HERSTELLUNG**

(30) Priorität: 11.12.2023 DE 102023212438
(71) Anmelder: Continental Reifen Deutschland GmbH, 30175 Hannover (DE)
(72) Erfinder: Spechtmeyer, Torben, 30175 Hannover (DE); Schlittenhard, Jan, 30175 Hannover (DE)
(74) Vertreter: Continental Corporation

(57) **Zusammenfassung**

Die Erfindung betrifft einen Fahrzeugluftreifen mit einem Laufstreifen und in den Laufstreifen eingebrachten Spikelöchern, in denen ein Spike (2) eingebracht ist, wobei der Spike (2) einen Spikekörper (12) aufweist, in den ein Pin (5) eingebettet ist, wobei der Pin (5) mit einem freien Ende (5a) aus dem Spikekörper (12) herausragt, wobei der Spikekörper (12) einen Gummikörper (10) mit einem oberen Bereich (10a) und einem unteren Bereich (10b) aufweist, wobei der Spikekörper (12) in ein Fußteil (13) mit einer Aufweitung (14) übergeht.

Erfindungsgemäß ist vorgesehen, dass der Spikekörper (12) einen unteren Bereich (12a) und einen oberen Bereich (12b) aufweist, wobei zumindest der untere Bereich (12a) des Spikekörpers (12) durch einen metallischen Hülsenkörper (9) gebildet ist, der zumindest den unteren Bereich (10a) des Gummikörpers (10) zumindest teilweise umgibt oder aufnimmt.

## Beschreibung

Die Erfindung betrifft einen Fahrzeugluftreifen mit Spikes gemäß dem Oberbegriff des Anspruches 1 sowie ein Verfahren zu seiner Herstellung.

Spikereifen, d.h. Fahrzeugluftreifen mit umfangsseitig angeordneten Spikes, weisen üblicherweise Spikes auf, die aus Metall gefertigt sind. Ein Spikekörper des jeweiligen Spikes besteht dazu normalerweise aus Stahl oder Aluminium und ein Pin des Spikes, der in dem Spikekörper aufgenommen oder eingebettet ist und aus diesem oberseitig herausragt, ist normalerweise aus einem Hartmetall oder Stahl gefertigt. Für den Pin ist ein härteres Material gewählt als für den Spikekörper, da der Pin in das Eis auf der Fahrbahn eindringt und über diesen die Kräfte übertragen werden. Der Spikekörper hingegen sollte verschleißfest sein, um den Pin über die gesamte Lebensdauer des Fahrzeugluftreifens zu stützen.

Weiterentwicklungen eines solchen Spikes betreffen das Material des Spikekörpers, der wie beispielsweise in EP 3 543 039 B1 beschrieben, aus einem Gummimaterial besteht, das insbesondere den Pin seitlich umgibt und diesen auch seitlich abstützt. Diese Spikes haben den Vorteil einer besseren Eisperformance, einer verbesserten Verschleißfestigkeit und erzeugen weniger Straßenabrieb (road wear).

Beide Arten von Spikes, d.h. herkömmliche Spikes mit Spikekörpern aus Metall und Spikes mit Spikekörpern aus Gummi, werden mechanisch mit dem Fahrzeugluftreifen verbunden und können zusätzlich chemisch verbunden werden, um eine zusätzliche Haltekraft zu erzeugen, wobei ein Verfahren zur chemischen Verbindung beispielsweise in EP 2 255 959 B1 beschrieben ist. Demnach wird als ein Haftsystem oder ein Haftvermittler eine trockene Beschichtung auf den Spikekörper aufgetragen und der Spikekörper anschließend in vorgefertigte Spikelöcher im Fahrzeugluftreifen gepresst. Durch Induktionsheizen wird die trockene Beschichtung auf dem Spikekörper anschließend durch Wärme aktiviert und dadurch eine chemische Verbindung zwischen dem Spikekörper und dem Fahrzeugluftreifen hergestellt.

Bei Fahrzeugluftreifen mit derartigen Spikes besteht ein Zielkonflikt zwischen der Eisperformance und der Verschleißfestigkeit und dem Straßenabrieb im Betrieb des Fahrzeugluftreifens. Da es für den Straßenabrieb gesetzliche Grenzen gibt, ist die Eisperformance limitiert, insbesondere für Spikekörper aus Stahl oder Aluminium. Bei Spikes mit Spikekörpern aus Gummi hingegen schränkt dieser Zielkonflikt weniger stark ein, da sie weniger Straßenabrieb erzeugen, allerdings verschlechtert sich für derartige Spikes die Dauerhaltbarkeit des Spikes am Fahrzeugluftreifen. Dadurch erhöht sich das Risiko, während der Lebensdauer des Fahrzeugluftreifens einen Spike zu verlieren. Die Ursache ist insbesondere in der chemischen Anbindung zwischen dem Gummimaterial des Spikekörpers und dem Gummimaterial des Fahrzeugluftreifens zu sehen, wobei der Haftvermittler bei einer Gummi-Gummi-Verbindung im Vergleich zu einer Metall-Gummi-Verbindung im Hinblick auf die Dauerhaltbarkeit weniger beständig ist. Daher kann es zu einer Beschädigung in der chemischen Verbindung zwischen dem Spikekörper aus Gummi und dem Fahrzeugluftreifen kommen, was zu einem Verlust des jeweiligen Spikes führen kann. Weiterhin kann es aber auch zu Beschädigungen in der Verbindung zwischen dem Pin und dem Spikekörper aus Gummi kommen, wodurch sich eine offene Verbindung zwischen beiden ausbilden kann, in der sich wiederum Sand und Schmutz einlagern kann. Dadurch können die Dauerhaltbarkeit und auch der Verschleiß zusätzlich beeinträchtigt werden.

Weitere Aufbauten von Spikes sind beispielsweise in EP 0 095 007 B1 oder GB190922720A beschrieben. In WO 2002 032 696A1 ist ferner beschrieben, ein verschleißfestes Element und/oder einen Pfropfen aus Gummi innerhalb eines metallischen Spikekörpers einzubringen, ohne dabei einen metallischen Pin zu verwenden. In EP 0 709 238 A2 ist eine zylindrische Halterung aus Kupfer vorgesehen, die einen Tellersitz mit einem nach oben abstehenden Pin sowie zumindest teilweise einen holzylindrischen Bolzen seitlich umgibt. Der Pin ist in dem holzylindrischen Bolzen aufgenommen, wobei der holzylindrische Bolzen aus einer Keramik gefertigt ist. Der Tellersitz und der Pin sind beide aus einem elastischen Silikonmaterial gefertigt. In RU 2117585 C1 ist ferner ein Spike beschrieben, bei dem ein Pin in den Spikekörper eingesetzt ist und der mit seinem freien Ende aus dem Spikekörper ragt. Der Spikekörper ist dabei gemäß einer Ausführungsform aus einer Kugel aus Gummi hergestellt.

Der folgenden Erfindung liegt die Aufgabe zugrunde, einen Fahrzeugluftreifen mit Spikes bereitzustellen und ein Verfahren zu dessen Herstellung anzugeben, mit denen die Dauerhaltbarkeit des Spikes am Fahrzeugluftreifen bei gleichbleibender oder verbesserter Verschleißfestigkeit und Eisperformance und verringertem Straßenabrieb erhöht wird.

Diese Aufgabe wird durch einen Fahrzeugluftreifen und ein Verfahren gemäß den unabhängigen Ansprüchen gelöst. Die Unteransprüche geben bevorzugte Weiterbildungen an.

Demnach ist ein Fahrzeugluftreifen mit einem Laufstreifen und in den Laufstreifen eingebrachten Spikelöchern vorgesehen, wobei in den Spikelöchern jeweils ein Spike eingebracht ist, wobei der jeweilige Spike einen Spikekörper aufweist, in den ein Pin eingebettet ist, wobei der Pin mit einem freien Ende in einer Längsrichtung aus dem Spikekörper herausragt, so dass das freie Ende aus dem Laufstreifen in etwa senkrecht, vorzugsweise um ca. 0.5mm bis 2mm, hervorsteht, wobei der Spikekörper einen Gummikörper aufweist, wobei der Gummikörper gemäß einer Ausführungsform zumindest bereichsweise an dem Laufstreifen anliegt, und der Spikekörper gemäß einer weiteren Ausführungsform durch einen vorzugsweise wärmeaktivierten Haftvermittler mit dem Laufstreifen chemisch verbunden ist,
wobei der Spikekörper auf der gegenüberliegenden Seite des freien Endes des Pins in ein Fußteil mit einer Aufweitung, d.h. einer radialen oder tellerartigen Erweiterung, übergeht zum mechanischen Verankern des jeweiligen Spikes in dem Spikeloch.

Erfindungsgemäß ist dabei vorgesehen, dass der Spikekörper einen unteren Bereich und einen oberen Bereich aufweist, wobei
- zumindest der untere Bereich des Spikekörpers durch einen nach oben hin offenen metallischen Hülsenkörper gebildet ist, der gemäß einer ausgewählten Ausführungsform über den vorzugsweise wärmeaktivierten Haftvermittler mit dem Laufstreifen chemisch verbunden ist und der einen unterer Bereich des Gummikörpers in radialer Richtung zumindest teilweise, vorzugsweise vollständig, umgibt oder aufnimmt, und
- der obere Bereich des Spikekörpers durch einen oberen Bereich des Gummikörpers gebildet ist, wobei
   --- der obere Bereich des Gummikörpers ebenfalls von dem metallischen Hülsenkörper in radialer Richtung zumindest teilweise, vorzugsweise vollständig, umgeben ist, oder
   --- der obere Bereich des Gummikörpers zumindest bereichsweise an dem Laufstreifen flächig anliegt und dabei nicht von dem metallischen Hülsenkörper umgeben ist, wobei der obere Bereich des Gummikörpers dann gemäß einer Ausführungsform auch über den vorzugsweise wärmeaktivierten Haftvermittler mit dem Laufstreifen chemisch verbunden sein kann.

Der metallische Hülsenkörper kann also lediglich den unteren Bereich des Spikekörpers mit ausbilden oder aber den unteren Bereich und den oberen Bereich des Spikekörpers. Eine chemische Verbindung kann dabei in allen genannten Ausführungen entweder nur zwischen dem Gummimaterial des Laufstreifens und dem metallischen Hülsenkörper (gesamter Spikekörper oder nur im unteren Bereich) ausgebildet sein oder aber zwischen dem Gummimaterial des Laufstreifens und dem metallischen Hülsenkörper (im unteren Bereich) einerseits und dem oberen Bereich des Gummikörpers andererseits. Es kann aber auch vorgesehen sein, dass der Spike lediglich mechanisch verankert ist.

Aufgrund des Gummi-Metall-Übergangs zumindest im unteren Bereich des Spikekörpers (oder über den gesamten Spikekörper) und vorzugsweise auch am Fußteil kann eine besonders gute und verschleißfeste chemische Verbindung zwischen dem Gummimaterial des Laufstreifens und dem jeweiligen metallischen Material ausgebildet werden, falls eine solche chemische Verbindung vorgesehen ist. Dies folgt daraus, dass dafür verwendete Haftvermittler üblicherweise eine besonders gute Haftwirkung bei einem Gummi-Metall-Übergang ausbilden können, nachdem diese wärmeaktiviert wurden. Auf diese Weise kann also die Dauerhaltbarkeit des Spikes am Fahrzeugluftreifen gewährleistet und ein Verlust während der Lebensdauer das Fahrzeugluftreifens vermieden werden. Dadurch, dass der Spike in seinem oberen Bereich teilweise durch einen Gummikörper gebildet wird, gibt es gegenüber einem Spike, der in seinem oberen Bereich vollständig aus Metall gefertigt ist, weniger Metallfläche, die die Straße berührt. Der Straßenabrieb ist dadurch bereits vermindert.

Bei einer Ausführung, bei der der obere Bereich des Spikekörpers nicht durch den Hülsenkörper gebildet ist, sondern lediglich durch den unumhüllten oberen Bereich des Gummikörpers, wird zusätzlich der Vorteil erreicht, dass der Spikekörper unterschiedliche Grenzflächen aufweist, mit denen er seitlich an dem Laufstreifen des Fahrzeugluftreifens im Bereich des jeweiligen Spikelochs flächig anliegt: Zum einen eine untere äußere Grenzfläche, die durch den metallischen Hülsenkörper bzw. durch dessen Wandung gebildet wird und die an dem Laufstreifen aus einem bestimmten Material aus Gummi anliegt (s.o.), und zum anderen eine obere äußere Grenzfläche, die durch den oberen Bereich des Gummikörpers gebildet wird und die ebenfalls an dem Laufstreifen aus Gummi anliegt. Daher gibt es einen Gummi-Gummi-Übergang im oberen Bereich des Spikekörpers und einen Gummi-Metall-Übergang im unteren Bereich des Spikekörpers, wobei der wärmeaktivierte Haftvermittler für eine unterschiedliche chemische Verbindung an dem jeweiligen Übergang sorgt.

Weiterhin ist der Gummikörper zumindest in seinem unteren Bereich (oder über den gesamten Spikekörper) sicher in dem Hülsenkörper aufgenommen oder gehalten, da dieser darin eingefüllt ist bzw. von dem Hülsenkörper seitlich umgeben ist. Dabei kann vorzugsweise vorgesehen sein, dass der Gummikörper zumindest in seinem unteren Bereich (oder über den gesamten Spikekörper) ebenfalls über einen wärmeaktivierte Haftvermittler mit dem Hülsenkörper über einen Gummi-Metall-Übergang chemisch verbunden ist, um eine verbesserte Haftwirkung zu erreichen.

Zudem können durch das reine Gummimaterial im oberen Bereich des Spikekörpers gleichzeitig die Eisperformance und die Verschleißfestigkeit verbessert sowie der Straßenabrieb noch weiter verringert werden, mit entsprechend vermindert hervortretendem Zielkonflikt. Demnach wird der Spikekörper im oberen Bereich nicht viel stärker abgenutzt als der Laufstreifen, und seitliche Haltekräfte bleiben über die gesamte Lebensdauer des Fahrzeugluftreifens erhalten, so dass die Haftung auf Eisflächen über die gesamte Lebensdauer in etwa gleichbleibt. Das Gummimaterial des Gummikörpers kann dabei an die Gummimischung in dem Laufstreifen angepasst werden, um eine entsprechende Wechselwirkung zwischen beiden zu erreichen.

Der Pin ist vorzugsweise aus einem Hartmetall, beispielsweise Wolframcarbid, gefertigt, was zudem für eine entsprechend gute Eisperformance durch eine effiziente Aufnahme von Kräften sorgen kann. Der Hülsenkörper hingegen kann aus einem weicheren Material, beispielsweise Aluminium, gefertigt werden, um eine gute chemische Verbindung über den Haftvermittler gewährleisten zu können sowie das Gewicht des Spikes zu reduzieren.

Vorzugsweise ist weiterhin vorgesehen, dass der Hülsenkörper eine Wandung aufweist, deren Außenseite an dem Laufstreifen anliegt, wobei die Wandung einen Innenraum des Hülsenkörpers in einer radialen Richtung umgibt, wobei zumindest der untere Bereich des Gummikörpers in dem Innenraum des Hülsenkörpers angeordnet ist und von der Wandung des Hülsenkörpers nach außen hin umschlossen ist, wobei gemäß einer Ausführungsform eine chemische Verbindung zwischen der Wandung des Hülsenkörpers und zumindest dem unteren Bereich des Gummikörpers ausgebildet ist, beispielsweise durch einen wärmeaktivierten Haftvermittler als Innenbeschichtung auf der Wandung. Dies stellt eine einfach herzustellende Konstruktion des Hülsenkörpers dar, wobei der Hülsenkörper beispielsweise hohlzylindrisch ausgebildet werden kann. Die Wandung kann aber auch von einer Hohlzylinderform abweichen.

Vorzugsweise ist weiterhin vorgesehen, dass der obere Bereich des Gummikörpers aus dem Innenraum des Hülsenkörpers nach oben hin in die Längsrichtung herausragt und damit nicht von dem metallischen Hülsenkörper umgeben ist. Damit wird die Unterteilung in die beiden Bereiche des Spikekörpers erreicht, wobei der gesamte Gummikörper von dem Hülsenkörper gehalten werden kann, vorzugsweise unterstützt durch eine unterseitige chemische Verbindung zum Hülsenkörper, wie beschrieben. Zusätzlich kann gemäß einer Ausführungsform oberseitig eine chemische Verbindung seitlich zum Laufstreifen bestehen.

Vorzugsweise ist weiterhin vorgesehen, dass ein Schaft des Pins den Gummikörper durchdringt, vorzugsweise vollständig durchdringt, so dass der Pin sicher im Spikekörper gehalten werden kann. Vorzugsweise ist dazu weiterhin vorgesehen, dass der Gummikörper eine zentrale Durchgangsöffnung aufweist, durch die der Schaft des Pins verläuft. Demnach kann die zentrale Durchgangsöffnung bei der Herstellung des Spikekörpers bzw. Gummikörpers darin eingebracht werden, so dass eine einfache Montage gewährleistet werden kann, indem der Pin nachträglich darin eingesteckt wird. Es kann aber auch vorgesehen sein, dass der Gummikörper um den Pin aufgebaut bzw. hergestellt wird, so dass die zentrale Durchgangsöffnung durch den Pin selbst ausgebildet wird, der beispielsweise bereits an dem Hülsenkörper montiert ist.

Vorzugsweise ist weiterhin vorgesehen, dass der Schaft des Pins mit dem Gummikörper chemisch verbunden ist, vorzugsweise über den wärmeaktivierten Haftvermittler. Dadurch kann auch der Pin sicher und dauerhaltbar am Spikekörper gehalten werden und auch dem Gummikörper kann zusätzliche Stabilität verliehen werden. Dies wirkt sich ebenfalls auf die Dauerhaltbarkeit des Spikes am Fahrzeugreifen aus.

Vorzugsweise ist weiterhin vorgesehen, dass der Pin an einem Flanschende, das dem freien Ende gegenüberliegt, einen Flansch aufweist, der über den Schaft mit dem freien Ende des Pins verbunden ist, wobei der Flansch an einem Boden des Hülsenkörpers befestigt ist oder der Flansch in dem Boden des Hülsenkörpers integriert ist. Dadurch wird ein Übergang zwischen dem Pin und dem Hülsenkörper geschaffen, durch den der Pin sicher und fest am Spike gehalten werden kann bzw. die Einbettung des Spikes über die gesamte Lebensdauer gesichert werden kann.

Vorzugsweise ist weiterhin vorgesehen, dass für den Fall, dass der Flansch an dem Boden des Hülsenkörpers befestigt ist, der Pin mit seinem Schaft durch eine zentrale Öffnung in dem Boden des Hülsenkörpers eingesteckt ist und der Flansch in einer Aussparung im Boden aufgenommen ist. Dadurch kann ein Herausrutschen des Pins aus dem Hülsenkörper und dem Gummikörper verhindert werden bzw. eine feste dauerhaltbare Verbindung des Pins gewährleistet werden. Ein Halten des Pins kann zusätzlich dadurch unterstützt werden, dass der Schaft des Pins gemäß einer Ausführungsform mit dem Gummikörper chemisch verbunden ist.

Vorzugsweise ist weiterhin vorgesehen, dass die Aussparung an einer Unterseite des Bodens im Bereich um die zentrale Öffnung angeordnet ist, wobei die Aussparung die Kontur des Flansches so abbildet, dass der darin aufgenommene Flansch und der Boden des Hülsenkörpers unterseitig bündig miteinander abschließen. Dadurch steht der Flansch nicht vom Boden des Hülsenkörpers ab, so dass im Fußbereich des Spikes eine glatte Verbindungsfläche bereitgestellt wird, über die eine optimierte chemische Verbindung zum Laufstreifen ausgebildet werden kann.

Vorzugsweise ist weiterhin vorgesehen, dass zwischen dem unteren Bereich des Gummikörpers und dem oberen Bereich des Gummikörpers umlaufend ein Übergang verläuft, insbesondere eine Stufe, wobei der Gummikörper im Bereich des Übergangs an einer oberen Stirnseite des Hülsenkörpers anliegt und/oder sich darauf abstützt. Dadurch wird seitlich des Spikekörpers ein bündiger Übergang zwischen dem oberen Bereich und dem unteren Bereich ermöglicht, insofern der obere Bereich des Gummikörpers nicht von dem Hülsenkörper umgeben ist bzw. der Hülsenkörper in Längsrichtung nicht über den gesamten Spikekörper ausgedehnt ist.

Vorzugsweise ist weiterhin vorgesehen, dass ein lichter unterer Durchmesser, den der Spikekörper in seinem unteren Bereich einnimmt, einem lichten oberen Durchmesser, den der obere Bereich des Spikekörpers und auch der obere Bereich des Gummikörpers einnimmt, entspricht, so dass der untere Bereich des Spikekörpers und der obere Bereich des Spikekörpers bündig ineinander übergehen, und wobei ein lichter Fuß-Durchmesser des Fußteils, der vorzugsweise durch die Aufweitung gebildet wird, größer ist als der lichte untere Durchmesser, den der Spikekörper in seinem unteren Bereich einnimmt. Demnach ist der Fuß-Durchmesser durch entsprechende Ausbildung der Aufweitung so bemessen, dass eine entsprechende mechanische Verankerung durch Formschluss oder Klemmung im entsprechend geformtem Spikeloch ermöglicht wird. Nach oben hin gehen dann die beiden Bereiche des Spikekörpers ineinander über, um Kanten zu vermeiden und glatte Oberflächen bereitzustellen und daher den chemischen Verbindungsvorgang zu optimieren. Der Querschnitt des Spikes (in radialer Richtung) ist dabei nicht zwangsläufig kreisrund, so dass auch ein lichter Durchmesser zum Tragen kommen kann. Die jeweiligen Bereiche können dabei auch von einer zylindrischen Form (Außenseite) abweichen und beispielsweise auch konisch oder gewellt ausgeführt sein.

Erfindungsgemäß ist auch ein Verfahren zum Herstellen eines Fahrzeugluftreifens mit mehreren Spikes vorgesehen, insbesondere eines erfindungsgemäßen Fahrzeugluftreifens, mit mindestens den folgenden Schritten:
- Bereitstellen eines Fahrzeugluftreifens mit einem Laufstreifen und mehreren in den Laufstreifen eingebrachten Spikelöchern, die eine bestimmte Gegenkontur aufweisen;
- Bereitstellen oder Herstellen von mehreren metallischen Hülsenkörpern, die jeweils zumindest einen unterer Bereich eines Spikekörpers des jeweiligen Spikes mit ausbilden und die jeweils in ein Fußteil mit einer Aufweitung übergehen, wobei die Teilkonturen des unteren Bereiches des Spikekörpers und des Fußteils vorzugsweise an die Gegenkontur des jeweiligen Spikelochs angepasst sind;
- Einfüllen oder Einbringen eines Gummikörpers in den jeweiligen Hülsenkörper derartig, dass
   --- der jeweilige Hülsenkörper zumindest einen unteren Bereich des Gummikörpers umgibt oder aufnimmt, um den unteren Bereich des Spikekörpers des jeweiligen Spikes mit der unteren äußeren Grenzfläche auszubilden, und
   --- ein oberer Bereich des Gummikörpers ebenfalls von dem metallischen Hülsenkörper umgeben ist, oder
   --- ein oberer Bereich des Gummikörpers aus dem jeweiligen Hülsenkörper in Längsrichtung herausragt und daher nicht von dem jeweiligen Hülsenkörper umgeben ist,
um einen oberen Bereich des Spikekörpers des jeweiligen Spikes mit der oberen äußeren Grenzfläche auszubilden;
- Einbringen oder Einbetten eines Pins in den Spikekörper des jeweiligen Spikes, wobei der Pin mit einem freien Ende in der Längsrichtung aus dem Spikekörper des jeweiligen Spikes herausragt, wobei der Pin während des Einfüllens oder Einbringens des Gummikörpers in den jeweiligen Hülsenkörper in den dadurch ausgebildeten Spikekörper eingebettet wird oder danach;
- optionales Beschichten zumindest des Spikekörpers des jeweiligen Spikes, vorzugsweise lediglich in dem unteren Bereich des Spikekörpers, der von dem Hülsenkörper umgeben ist, oder sowohl in dem unteren Bereich als auch in dem oberen Bereich, und vorzugsweise auch des Fußteils mit einem Haftvermittler;
- Einbringen oder Einpressen bzw. Installieren des jeweiligen Spikes mit dem zumindest teilweise beschichteten Spikekörper in das jeweilige Spikeloch derartig, dass das freie Ende des Pins aus dem Laufstreifen in etwa senkrecht um beispielsweise 0.5mm bis 2mm hervorsteht;
- optionale Wärmebehandlung des jeweils eingebrachten oder eingepressten Spikes, um den optional vorhandenen Haftvermittler zumindest an dem Spikekörper und vorzugsweise auch an dem Fußteil zu aktivieren und eine chemische Verbindung zumindest zwischen dem Spikekörper und vorzugsweise auch zwischen dem Fußteil und dem Laufstreifen auszubilden.

Auf diese Weise kann der jeweilige Spike mit den beschriebenen Vorteilen in einfacher Weise ausgebildet und mit dem Fahrzeugluftreifen in dem Laufstreifen mechanisch und chemisch verbunden werden.

Vorzugsweise ist weiterhin vorgesehen, dass auch der Pin mit einem Haftvermittler beschichtet wird, bevor dieser in den Spikekörper des jeweiligen Spikes eingebracht oder eingebettet wird, so dass bei der Wärmebehandlung des jeweils eingebrachten oder eingepressten Spikes auch der Haftvermittler an dem Pin aktiviert wird und eine chemische Verbindung zwischen dem Pin und dem Spikekörper ausgebildet wird. Es kann auch vorgesehen sein, dass der jeweilige Hülsenkörper innenseitig mit einem Haftvermittler beschichtet wird, bevor der Gummikörper in den Hülsenkörper eingefüllt oder eingebracht wird, so dass bei der Wärmebehandlung des jeweils eingebrachten oder eingepressten Spikes auch der Haftvermittler an dem Hülsenkörper aktiviert wird und eine chemische Verbindung zwischen dem Hülsenkörper und dem Gummikörper (je nach Ausführung nur unterseitig oder über den gesamten Spikekörper) ausgebildet wird. Dadurch kann der Pin noch sicherer am Spikekörper bzw. der Gummikörper noch sicherer im Hülsenkörper gehalten und die Stabilität verbessert werden.

Vorzugsweise ist weiterhin vorgesehen, dass das Einfüllen oder Einbringen des Gummikörpers in den jeweiligen Hülsenkörper derartig erfolgt, dass in dem Gummikörper eine zentrale Durchgangsöffnung gelassen wird oder eine zentrale Durchgangsöffnung nachträglich in den Gummikörper eingebracht wird, und ein Schaft des Pins so durch diese zentrale Durchgangsöffnung gesteckt wird, dass das freie Ende des Pins oberseitig aus der zentralen Durchgangsöffnung herausragt, wobei der Pin vorzugsweise durch eine zentrale Öffnung in einem Boden des Hülsenkörpers gesteckt wird bis ein Flansch des Pins in einer Aussparung in dem Boden liegt. Alternativ kann vorgesehen sein, dass der Gummikörper während des Einfüllens oder Einbringens des Gummikörpers in den jeweiligen Hülsenkörper um den Pin aufgebaut bzw. hergestellt wird, so dass die zentrale Durchgangsöffnung durch den Pin selbst ausgebildet wird, der beispielsweise vor dem Einfüllen des Gummikörpers bereits an dem Hülsenkörper montiert ist. Dies ermöglicht jeweils eine einfache Montage oder Einbettung des Pins am Spikekörper.

Vorzugsweise ist weiterhin vorgesehen, dass das Einfüllen oder Einbringen des Gummikörpers in den jeweiligen Hülsenkörper derartig erfolgt, dass zumindest der untere Bereich des Gummikörpers in einem Innenraum des Hülsenkörpers, der seitlich in der radialen Richtung durch eine Wandung des Hülsenkörpers und nach unten hin von einem Boden des Hülsenkörpers begrenzt ist, angeordnet ist. Dadurch wird der sichere Halt des Gummikörpers am Hülsenkörper gewährleistet, was durch eine chemische Verbindung zwischen beiden unterstützt werden kann, und der Gummi-Metall-Übergang zum Gummimaterial des Fahrzeugreifens zumindest im unteren Bereich des Spikekörpers ermöglicht.

In den Zeichnungen zeigen:
- Fig. 1: einen Ausschnitt eines Reifenprofils eines Fahrzeugluftreifens mit mehreren Spikes;
- Fig. 2: eine Detailansicht des Spikes gemäß Fig. 1 in einer ersten Ausführungsform; und
- Fig. 3: eine weitere Detailansicht des Spikes gemäß einer weiteren Ausführungsform; und
- Fig. 4: ein Flussdiagramm des erfindungsgemäßen Verfahrens.

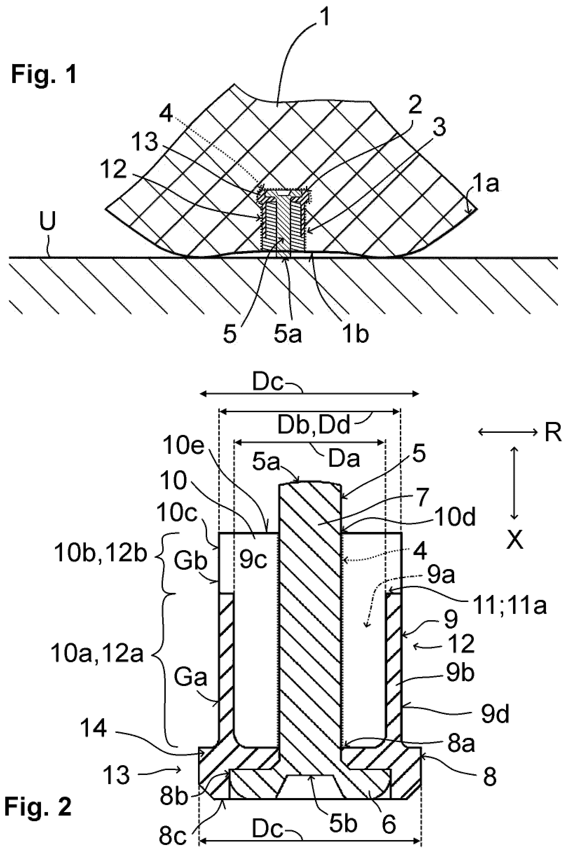

Figur 1 zeigt schematisch einen Ausschnitt eines Fahrzeugluftreifens 1, insbesondere Fahrzeugluftreifens, der auf einem Untergrund U abrollt und der auf seinem Umfang verteilt mehrere Spikes 2 aufweist. Unter einem Spike 2 wird dabei eine Art Stift oder Bolzen verstanden, der wie dargestellt in den profilierten Laufstreifen 1a des Fahrzeugluftreifens 1 eingesetzt und darin verankert ist. Dazu werden bei der Herstellung des Fahrzeugluftreifens 1 in dem Laufstreifen 1a in bekannter Weise mehrere Spikelöcher 3 eingebracht, in die der jeweilige Spike 2 mechanisch eingepresst wird. Anschließend werden der Fahrzeugluftreifen 1 und der eingepresste Spike 2 durch einen Haftvermittler 4 chemisch bzw. stoffschlüssig miteinander verbunden. Bei dem Haftvermittler 4 handelt es sich vorzugsweise um einen trockenen Haftvermittler 4, beispielsweise Parlock, Chemlock oder Chemosil, mit dem der Spike 2 vor ein Einpressen in das jeweilige Spikeloch 3 beschichtet wird. Der Haftvermittler 4 wird nach dem Einpressen des Spikes 2 in das jeweilige Spikeloch 3 durch eine gezielte Wärmebehandlung aktiviert, um die chemische Verbindung auszubilden.

Jeder Spike 2 weist wie in Fig. 2 in einer Detailansicht dargestellt einen in Längsrichtung X verlaufenden Pin 5 auf, der mit seinem freien Ende 5a im in das jeweilige Spikeloch 3 eingepressten Zustand aus dem Laufstreifen 1a herausragt bzw. hervorsteht. An einem Flanschende 5b, das dem freien Ende 5a gegenüberliegt, weist der Pin 5 einen Flansch 6 auf, der über einen in Längsrichtung X verlaufenden Schaft 7 mit dem freien Ende 5a des Pins 5 verbunden ist.

Der Pin 5 ragt durch einen Boden 8 eines nach oben hin offenen Hülsenkörpers 9, so dass der Schaft 7 zentral durch einen Innenraum 9a des Hülsenkörpers 9 verläuft, vorzugsweise koaxial dazu, und oberseitig aus diesem herausragt. Dazu ist der Pin 5 mit seinem Schaft 7 innerhalb einer Toleranz passgenau durch eine zentrale Öffnung 8a im Boden 8 des Hülsenkörpers 9 eingesteckt und der Flansch 6 liegt innerhalb einer Toleranz passgenau in einer Aussparung 8b im Boden 8. Die Aussparung 8b befindet sich an einer Unterseite 8c des Bodens 8 im Bereich um die Öffnung 8a und bildet die Kontur des Flansches 6 so ab, dass der darinliegende Flansch 6 und der Boden 8 des Hülsenkörpers 9 unterseitig bündig miteinander abschließen.

Der gesamte Pin 5 und der Hülsenkörper 9 sind beide aus einem metallischen Werkstoff hergestellt. Vorzugsweise ist der Pin 5 dabei aus einem Hartmetall, beispielsweise Stahl, vorzugsweise Wolframcarbid, gefertigt und der Hülsenkörper 9 aus einem weicheren metallischen Material, beispielsweise aus Aluminium. Es können aber auch beide Elemente 5, 9 aus einem Hartmetall gefertigt sein. Um die Kräfte vom Eis auf dem Untergrund U effizient aufnehmen und ableiten zu können, ist aber vorgesehen, dass zumindest der Pin 5 aus Hartmetall gefertigt ist. Gemäß einer nicht dargestellten Ausführungsform können der Pin 5 und der Hülsenkörper 9 auch integral bzw. einteilig gefertigt sein, so dass der Schaft 7 einteilig in den Boden 8 des Hülsenkörpers 9 übergeht, so dass der Boden 8 gleichzeitig den Flansch 6 mit ausbildet.

Wie in Fig. 2 ebenfalls ersichtlich, ist in den Innenraum 9a des Hülsenkörpers 9 ein Gummikörper 10 eingefüllt, wobei ein unterer Bereich 10a des Gummikörpers 10 innerhalb des Hülsenkörpers 9 liegt, d.h. von der hülsenförmigen Wandung 9b des Hülsenkörpers 9 in radialer Richtung R (bezüglich des Spikes 2) nach außen hin umschlossen ist. Zwischen dem unteren Bereich 10a des eingefüllten Gummikörpers 10 und der hülsenförmigen Wandung 9b des Hülsenkörpers 9 kann eine chemische Verbindung ausgebildet sein, beispielsweise über einen wärmeaktivierten Haftvermittler, um eine Dauerhaltbarkeit zu verbessern. Ein oberer Bereich 10b des Gummikörpers 10 ragt in Längsrichtung X aus dem Innenraum 9a des Hülsenkörpers 9 hinaus und ist daher in radialer Richtung R (bezüglich des Spikes 2) nach außen hin nicht mehr von dem Hülsenkörper 9 bzw. dessen Wandung 9b umschlossen. In einer alternativen, nicht dargestellten Ausführungsform kann sich der Hülsenkörper 9 auch weiter nach oben in die Längsrichtung X erstrecken und dabei auch den oberen Bereich 10b des Gummikörpers 10 radial umschließen.

Der obere Bereich 10b des Gummikörpers 10 weist dabei einen oberen Durchmesser Db auf, der bei der dargestellten un-umschlossenen Ausführung größer ist als ein innerer Durchmesser Da des unteren Bereiches 10a des Gummikörpers 10. Ist der Gummikörper 10 nicht kreisrund ausgebildet, sind entsprechend die lichten Durchmesser Da, Db zu betrachten, d.h. grundsätzlich deckt der obere Bereich 10b des Gummikörpers 10 eine größere Fläche ab als der untere Bereich 10a des Gummikörpers 10. Dadurch entsteht zwischen den beiden Bereichen 10a, 10b umlaufend ein Übergang 11, der die unterschiedliche Dimensionierung der Bereiche 10a, 10b überbrückt.

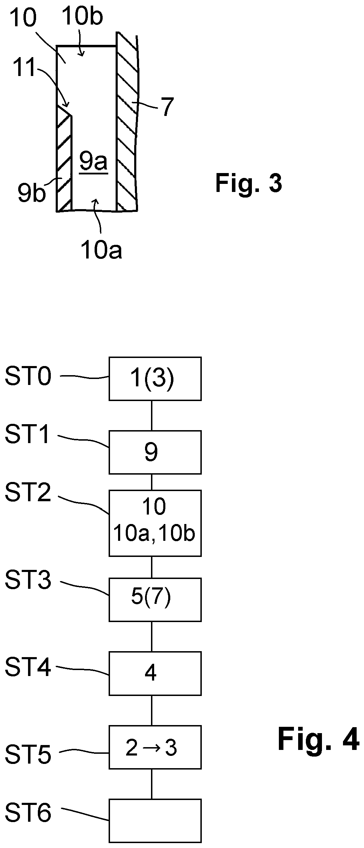

Der Übergang 11 wird in der in Fig. 1 und 2 dargestellten Ausführungsform durch eine umlaufende Stufe 11a gebildet. Der Gummikörper 10 liegt im Bereich des Übergangs 11 mit der Stufe 11a auf einer waagerechten oberen Stirnseite 9c der Wandung 9b des Hülsenkörpers 9 auf bzw. stützt sich darauf ab, so dass eine Außenseite 9d der Wandung 9b und eine obere Außenseite 10c des Gummikörpers 10, d.h. die Außenseite im oberen Bereich 10b des Gummikörpers 10, bündig miteinander abschließen. Ist der Übergang 11 nicht stufenförmig ausgeführt, sondern beispielsweise als eine linear ansteigende oder abgerundete Flanke ausgeführt, wie in Fig. 3 beispielhaft dargestellt, kann die Wandung 9b des Hülsenkörpers 9 zur Stirnseite 9c hin entsprechend komplementär zum Übergang 11 ausgeführt sein, so dass sich der Gummikörper 10 am Übergang 11 flächig an den Hülsenkörper 9 anlegen kann und ein bündiger Abschluss ohne Lufteinschlüsse gewährleistet werden kann.

Der Gummikörper 10 weist zudem eine zentrale Durchgangsöffnung 10d auf, durch die der Schaft 7 des Pins 5 verläuft, wobei das freie Ende 5a des Pins 5 oberseitig aus der zentralen Durchgangsöffnung 10d herausragt. Der Pin 5 bzw. der Schaft 7 ist dabei ebenfalls mit einem Haftvermittler 4 versehen, der durch eine thermische Aktivierung eine chemische Verbindung zwischen dem Schaft 7 und dem Gummikörper 10 herstellt. Eine Oberseite 10e des Gummikörpers 10 liegt in etwa zwischen 0.5mm und 2mm unterhalb des freien Endes 5a des Pins 5, wobei die Oberseite 10e im in das Spikeloch 3 eingepressten Zustand des Spikes 2 bündig mit einer Oberfläche 1b des Laufstreifens 1a abschließt, wie in Fig. 1 angedeutet. Der Pin 5 bzw. das freie Ende 5a steht daher (im unverschlissenen Zustand) um diese zwischen 0.5mm und 2mm aus dem Laufstreifen 1a hervor.

Der erfindungsgemäße Spike 2 weist also einen Spikekörper 12 auf, der gebildet wird durch den Hülsenkörper 9 und den Gummikörper 10, wobei der Pin 5 in diesen Spikekörper 12 eingebettet ist und das freie Ende 5a des Pins 5 oberseitig aus diesem herausragt. Der Spikekörper 12 weist dann entsprechend der Unterteilung des Gummikörpers 10 einen unteren Bereich 12a auf, der gebildet wird durch den unteren Bereich 10a des Gummikörpers 10 und die Wandung 9b des metallischen Hülsenkörpers 9. Der obere Bereich 12b des Spikekörpers 12 hingegen wird gemäß einer bevorzugten Ausführungsform entsprechend lediglich durch den oberen Bereich des Gummikörpers 10 gebildet, ohne eine entsprechende metallische Ummantelung, oder gemäß einer weiteren nicht dargestellten Ausführungsform durch den oberen Bereich des Gummikörpers 10, der ebenfalls von der Wandung 9b des metallischen Hülsenkörpers 9 umgeben ist, wenn diese Wandung 9b in Längsrichtung X weiter nach oben hin ausgedehnt ist.

Der Spikekörper 12 geht unterseitig in ein Fußteil 13 des Spikes 2 über, das insbesondere gebildet wird durch den Boden 8 des Hülsenkörpers 9 mit dem darin aufgenommenen Flansch 6 des Pins 5, wobei der Boden 8 in radialer Richtung R (bezüglich des Spikes 2) nach außen hin eine Aufweitung 14 aufweist, die am Fußteil 13 vorzugsweise vollumfänglich um den Spike 2 verläuft. Da der Boden 8 Bestandteil des Hülsenkörpers 9 ist und die Aufweitung 14 vorzugsweise integraler bzw. einteiliger Bestandteil des Bodens 8 selbst ist, ist das Fußteil 13 im Wesentlichen ebenfalls aus dem weicheren metallischen Material des Hülsenkörpers 9 gefertigt, beispielsweise aus Aluminium. Allenfalls der im Fußbereich 13 aufgenommene Flansch 6 des Pins 5 ist dann aus Hartmetall gefertigt.

Ein (lichter) Fuß-Durchmesser Dc des derartig aufgeweiteten Fußteils 13 ist größer als ein (lichter) unterer Durchmesser Dd, den der Spikekörper 12 in seinem unteren Bereich 12a einnimmt. Durch eine solche Aufweitung 14 kann eine sichere mechanische Verankerung im Spikeloch 3 gewährleistet werden. Der untere Durchmesser Dd entspricht dabei gemäß der dargestellten Ausführungsform gleichzeitig auch dem (lichten) oberen Durchmesser Db, den der obere Bereich 10b des Gummikörpers 10 (und in dieser Ausführungsform auch der obere Bereich 12b des Spikekörpers 12) einnimmt. Grundsätzlich könnte der obere Durchmesser Db aber auch größer als der untere Durchmesser Dd sein. Zudem kann die Kontur des Spikekörpers 12 im oberen und unteren Bereich 12a, 12b auch von einer Zylinderform (wie dargestellt) abweichen. So können auch konische oder gewellte oder gewölbte Konturen vorgesehen sein, an die die Gegenkontur des Spikelochs 3 dann entsprechend angepasst ist.

Durch die unterschiedlichen Materialien des Spikekörpers 12 bei einer zweiteiligen Ausführung, d.h. mit einer metallischen unteren äußeren Grenzfläche Ga (im unteren Bereich 12a des Spikekörpers 12), die durch die metallische Wandung 9b des Hülsenkörpers 9 gebildet wird, und mit einer oberen äußeren Grenzfläche Gb (im oberen Bereich 12b des Spikekörpers 12) aus Gummi, die durch den oberen Bereich 10b des Gummikörpers 10 gebildet wird, ergeben sich die folgenden Vorteile:
Wird der Spike 2 im Spikeloch 3 in dem Laufstreifen 1a verankert, liegt der Spikekörper 12
- in seinem unteren Bereich 12a mit seiner metallischen unteren äußeren Grenzfläche Ga an dem Gummimaterial des Laufstreifens 1a an, und
- in seinem oberen Bereich 12b mit seiner gummierten oberen äußeren Grenzfläche Ga an dem Gummimaterial des Laufstreifens 1a an. Ferner liegt das metallische Fußteil 13 des Spikes 2 an dem Gummimaterial des Laufstreifens 1a an.

Der Spikekörper 12 und das Fußteil 13 sind mit dem Haftvermittler 4 beschichtet, der nach dem Einsetzen und mechanischen Verankern in dem Spikeloch 3 derartig durch Wärme aktiviert wird, dass eine stoffschlüssige bzw. eine chemische Verbindung zwischen dem Spikekörper 12 bzw. dem Fußteil 13 und dem Laufstreifen 1a hergestellt wird. Dabei bildet sich im unteren Bereich 12a des Spikekörpers 12 und am Fußteil 13 eine besonders gute und verschleißfeste chemische Verbindung zwischen dem Gummimaterial des Laufstreifens 1a und dem jeweiligen metallischen Material aus, da der Haftvermittler 4 auf eine solche Gummi-Metall-Verbindung ausgelegt oder optimiert ist. Auf diese Weise wird die Dauerhaltbarkeit des Spikes 2 am Fahrzeugluftreifen 1 gewährleistet und ein Verlust während der Lebensdauer das Fahrzeugluftreifens 1 vermieden.

Gleichzeitig können durch das reine Gummimaterial im oberen Bereich 12b des Spikekörpers 12 die Eisperformance und die Verschleißfestigkeit gleichzeitig verbessert und der Straßenabrieb verringert werden, mit entsprechend vermindert hervortretendem Zielkonflikt. Demnach wird der Spikekörper 12 im oberen Bereich 12b nicht viel stärker abgenutzt als der Laufstreifen 1a, und seitliche Haltekräfte bleiben über die gesamte Lebensdauer des Fahrzeugluftreifens 1 erhalten, so dass die Haftung auf Eisflächen in etwa gleichbleibt. Der Pin 5 aus Hartmetall sorgt zudem für eine entsprechend gute Eisperformance durch eine effiziente Aufnahme von Kräften.

In einem erfindungsgemäßen Verfahren, das beispielhaft in Fig. 4 dargestellt ist, sind die folgenden Prozessschritte zum Herstellen eines solchen Fahrzeugluftreifens 1 vorgesehen:
Zunächst wird in einem anfänglichen Schritt ST0 ein Fahrzeugluftreifen 1 mit mehreren auf dem Umfang des Laufstreifens 1a verteilt eingebrachten Spikelöchern 3 mit einer bestimmten Gegenkontur bereitgestellt. Der bereitgestellte Fahrzeugluftreifen 1 wird in herkömmlicher Weise in einem Vulkanisierungsverfahren hergestellt, wobei die Spikelöcher 3 während der Vulkanisation des Rohreifens durch entsprechend mit der Gegenkontur geformte Formvorsprünge in der Vulkanisationsform ausgebildet werden.

In einem ersten Schritt ST1 wird dann der Hülsenkörper 9 mit einer Wandung 9b sowie mit dem Boden 8 und der Aufweitung 14, die das Fußteil 13 mit ausbilden, hergestellt und bereitgestellt, wobei der Hülsenkörper 9 einen Innenraum 9a aufweist, der durch die Wandung 9b abgegrenzt wird. Die Wandung 9b und das Fußteil 13 werden mit einer bestimmten Teilkontur ausgebildet, die zu der Gegenkontur des Spikeloches 3 in seinem unteren Bereich passt, wobei die Gegenkontur nicht exakt der Teilkontur entspricht oder entsprechen muss.

In einem zweiten Schritt ST2 wird der Innenraum 9a des Hülsenkörpers 9 mit einem Gummimaterial bodentief gefüllt, das den Gummikörper 10 bildet. Der Gummikörper 10 ist dabei in seinem unteren Bereich 10a von der Wandung 9b des Hülsenkörpers 9 umgeben bzw. liegt dieser in seinem unteren Bereich 10a an der Wandung 9b von innen an und berührt auch den Boden 8 des Hülsenkörpers 9. Bei einer zweiteiligen Ausführung steht der Gummikörper 10 mit seinem oberen Bereich 10b ohne eine metallische Umhüllung aus dem Innenraum 9a in Längsrichtung X hervor und bildet dabei eine bestimmte Teilkontur aus, die zu der Gegenkontur des Spikeloches 3 in seinem oberen Bereich passt. Ergänzend kann die Wandung 9b des Hülsenkörpers 9 vor dem Einfüllen des Gummimaterials von innen mit einem Haftvermittler 4 beschichtet werden.

Gleichzeitig wird in dem Gummikörper 10 eine zentrale Durchgangsöffnung 10d gelassen oder diese nachträglich in diesen eingebracht, so dass in einem dritten Schritt ST3 der Schaft 7 des Pins 5 so durch diese zentrale Durchgangsöffnung 10d gesteckt werden kann, dass das freie Ende 5a des Pins 5 oberseitig aus der zentralen Durchgangsöffnung 10d herausragt. Dies geschieht vorzugsweise von unten, indem der Pin 5 durch die zentrale Öffnung 8a im Boden 8, die mit der zentralen Durchgangsöffnung 10d fluchtet, gesteckt wird bis der Flansch 6 des Pins 5 passgenau in der Aussparung 8b im Boden 8 liegt. Der Pin 5, insbesondere der Schaft 7, wird dabei vorher vorzugsweise mit dem Haftvermittler 4 beschichtet und anschließend beispielsweise unter Ausbildung einer Presspassung in die zentrale Durchgangsöffnung 10d eingepresst oder eingedrückt, um diesen sicher darin zu halten. Alternativ kann der Pin 5 bereits vorher am Hülsenkörper 9 befestigt werden, so dass sich das Gummimaterial, das den Gummikörper 10 bildet, um den Schaft 7 des bereits montierten (und mit dem Haftvermittler 4 beschichteten) Pins 5 legt und die zentrale Durchgangsöffnung 10d dadurch ausgebildet wird und der Pin 5 bereits während der Herstellung in der zentralen Durchgangsöffnung 10d positioniert wird.

In einem vierten Schritt ST4 wird auch der Spike 2, d.h. insbesondere der Spikekörper 12 in seinem unteren Bereich 12a und ggf. auch in seinem oberen Bereich 12b und das Fußteil 13 mit dem Haftvermittler 4 beschichtet, wobei dies beispielsweise derselbe Haftvermittler 4 wie auf dem Schaft 7 des Pins 7 und an der Wandung 9b des Hülsenkörpers 9 sein kann. Anschließend erfolgt in einem fünften Schritt ST5 das Einbringen bzw. Installieren des beschichteten Spikes 2 in das vorher eingebrachte Spikeloch 3 in dem Laufstreifen 1a, so dass eine mechanische Verankerung erfolgt.

In einem sechsten Schritt ST6 folgt dann eine Wärmebehandlung beispielsweise in einem Autoklav oder durch Induktionsheizen, um das oder die Haftvermittler 4 zwischen dem Spike 2 und dem Laufstreifen 1a und auch zwischen dem Schaft 7 des Pins 5 und dem Gummikörper 10 und auch zwischen der Wandung 9b des Hülsenköpers 9 und dem Gummikörper 10 zu aktivieren und damit eine chemische Verbindung zwischen den jeweiligen Verbindungspartnern auszubilden. Während der Wärmebehandlung wird die Umgebung um den verankerten Spike 2 für einen kurzen Zeitraum (z.B. zwischen einer Sekunde und 10 Minuten) von zwischen einer Sekunde und mehreren Sekunden auf eine Temperatur von zwischen 90°C und 180°C gebracht.

Anschließend wird der Fahrzeugluftreifen 1 mit weiteren Schritten fertiggestellt.

### Bezugszeichenliste

- 1: Fahrzeugreifen
- 1a: Laufstreifen des Fahrzeugreifens 1
- 1b: Oberfläche des Laufstreifens 1a
- 2: Spike
- 3: Spikeloch
- 4: Haftvermittler
- 5: Pin
- 5a: freies Ende des Pins 5
- 5b: Flanschende
- 6: Flansch
- 7: Schaft
- 8: Boden des Hülsenkörpers 9
- 8a: zentrale Öffnung im Boden 8
- 8b: Aussparung im Boden 8
- 8c: Unterseite des Bodens 8
- 9: Hülsenkörper
- 9a: Innenraum des Hülsenkörpers 9
- 9b: Wandung des Hülsenkörpers 9
- 9c: oberen Stirnseite der Wandung 9b
- 9d: Außenseite der Wandung 9b
- 10: Gummikörper
- 10a: unterer Bereich des Gummikörpers 10
- 10b: oberer Bereich des Gummikörpers 10
- 10c: obere Außenseite des Gummikörpers 10
- 10d: zentrale Durchgangsöffnung
- 10e: Oberseite des Gummikörpers 10
- 11: Übergang
- 11a: Stufe
- 12: Spikekörper
- 12a: unteren Bereich des Spikekörpers 12
- 12b: oberer Bereich des Spikekörpers 12
- 13: Fußteil
- 14: Aufweitung
- Da: innerer Durchmesser
- Db: oberer Durchmesser
- Dc: Fuß-Durchmesser
- Dd: unterer Durchmesser
- Ga: untere äußere Grenzfläche
- Gb: obere äußere Grenzfläche
- R: radiale Richtung
- U: Untergrund
- X: Längsrichtung

## Patentansprüche

1. Fahrzeugluftreifen (1) mit einem Laufstreifen (1a) und in den Laufstreifen (1a) eingebrachten Spikelöchern (3), wobei in den Spikelöchern (3) jeweils ein Spike (2) eingebracht ist, wobei der jeweilige Spike (2) einen Spikekörper (12) aufweist, in den ein Pin (5) eingebettet ist, wobei der Pin (5) mit einem freien Ende (5a) in einer Längsrichtung (X) aus dem Spikekörper (12) herausragt, so dass das freie Ende (5a) aus dem Laufstreifen (1a) hervorsteht,
wobei der Spikekörper (12) einen Gummikörper (10) mit einem oberen Bereich (10a) und einem unteren Bereich (10b) aufweist,
wobei der Spikekörper (12) in ein Fußteil (13) mit einer Aufweitung (14) übergeht zum Verankern des jeweiligen Spikes (2) in dem Spikeloch (3),
**dadurch gekennzeichnet, dass**
der Spikekörper (12) einen unteren Bereich (12a) und einen oberen Bereich (12b) aufweist, wobei zumindest der untere Bereich (12a) des Spikekörpers (12) durch einen metallischen Hülsenkörper (9) gebildet ist, der zumindest den unteren Bereich (10a) des Gummikörpers (10) zumindest teilweise umgibt oder aufnimmt.

2. Fahrzeugluftreifen (1) nach Anspruch 1,
**dadurch gekennzeichnet, dass**
der obere Bereich (12a) des Spikekörpers (12) durch den oberen Bereich (10b) des Gummikörpers (10) gebildet ist, wobei
--- der metallische Hülsenkörper (9) auch den oberen Bereich (12a) des Spikekörpers (12) mit ausbildet und auch der obere Bereich (10b) des Gummikörpers (10) von dem metallischen Hülsenkörper (9) zumindest teilweise umgeben ist, oder
--- der obere Bereich (10b) des Gummikörpers (10) zumindest bereichsweise an dem Laufstreifen (1a) flächig anliegt und dabei nicht von dem metallischen Hülsenkörper (9) umgeben ist, wobei der obere Bereich (10b) des Gummikörpers (10) vorzugsweise mit dem Laufstreifen (1a) chemisch verbunden ist.

3. Fahrzeugluftreifen (1) nach Anspruch 1 oder 2,
**dadurch gekennzeichnet, dass**
der Hülsenkörper (9) eine Wandung (9b) aufweist, deren Außenseite (9d) an dem Laufstreifen (1a) anliegt, wobei die Wandung (9b) einen Innenraum (9a) des Hülsenkörpers (9) umgibt, wobei zumindest der untere Bereich (10a) des Gummikörpers (10) in dem Innenraum (9a) des Hülsenkörpers (9) angeordnet ist und von der Wandung (9b) des Hülsenkörpers (9) nach außen hin umschlossen ist,
wobei vorzugsweise zumindest der untere Bereich (10a) des Gummikörpers (10) mit der Wandung (9b) des Hülsenkörpers (9) chemisch verbunden ist und/oder die Wandung (9b) des Hülsenkörper (9) mit dem Laufstreifen (1a) chemisch verbunden ist, beispielsweise über einen Haftvermittler (4).

4. Fahrzeugluftreifen (1) nach Anspruch 3,
**dadurch gekennzeichnet, dass**
der obere Bereich (10b) des Gummikörpers (10) aus dem Innenraum (9a) des Hülsenkörpers (9) nach oben hin in die Längsrichtung (X) herausragt.

5. Fahrzeugluftreifen (1) nach einem der vorhergehenden Ansprüche,
**dadurch gekennzeichnet, dass**
ein Schaft (7) des Pins (5) den Gummikörper (10) durchdringt, vorzugsweise vollständig durchdringt.

6. Fahrzeugluftreifen (1) nach Anspruch 5,
**dadurch gekennzeichnet, dass**
der Gummikörper (10) eine zentrale Durchgangsöffnung (10d) aufweist, durch die der Schaft (7) des Pins (5) verläuft.

7. Fahrzeugluftreifen (1) nach Anspruch 5 oder 6,
**dadurch gekennzeichnet, dass**
der Schaft (7) des Pins (5) mit dem Gummikörper (10) chemisch verbunden ist.

8. Fahrzeugluftreifen (1) nach einem der Ansprüche 5 bis 7,
**dadurch gekennzeichnet, dass**
der Pin (5) an einem Flanschende (5b), das dem freien Ende (5a) gegenüberliegt, einen Flansch (6) aufweist, der über den Schaft (7) mit dem freien Ende (5a) des Pins (5) verbunden ist, wobei der Flansch (6) an einem Boden (8) des Hülsenkörpers (9) befestigt ist oder der Flansch (6) in dem Boden (8) des Hülsenkörpers (9) integriert ist.

9. Fahrzeugluftreifen (1) nach Anspruch 8,
**dadurch gekennzeichnet, dass**
für den Fall, dass der Flansch (6) an dem Boden (8) des Hülsenkörpers (9) befestigt ist, der Pin (5) mit seinem Schaft (7) durch eine zentrale Öffnung (8a) in dem Boden (8) des Hülsenkörpers (9) eingesteckt ist und der Flansch (6) in einer Aussparung (8b) im Boden (8) aufgenommen ist.

10. Fahrzeugluftreifen (1) nach Anspruch 9,
**dadurch gekennzeichnet, dass**
die Aussparung (8b) an einer Unterseite (8c) des Bodens (8) im Bereich um die zentrale Öffnung (8a) angeordnet ist, wobei die Aussparung (8b) die Kontur des Flansches (6) so abbildet, dass der darin aufgenommene Flansch (6) und der Boden (8) des Hülsenkörpers (9) unterseitig bündig miteinander abschließen.

11. Fahrzeugluftreifen (1) nach einem der vorhergehenden Ansprüche,
**dadurch gekennzeichnet, dass**
zwischen dem unteren Bereich (10a) des Gummikörpers (10) und dem oberen Bereich des Gummikörpers (10b) umlaufend ein Übergang (11) verläuft, insbesondere eine Stufe (11a), wobei der Gummikörper (10) im Bereich des Übergangs (11) an einer oberen Stirnseite (9c) des Hülsenkörpers (9) anliegt und/oder sich darauf abstützt.

12. Fahrzeugluftreifen (1) nach einem der vorhergehenden Ansprüche,
**dadurch gekennzeichnet, dass**
ein unterer Durchmesser (Dd), den der Spikekörper (12) in seinem unteren Bereich (12a) einnimmt, einem oberen Durchmesser (Db), den der obere Bereich (12b) des Spikekörpers (12) einnimmt, entspricht, so dass der untere Bereich (12a) des Spikekörpers (12) und der obere Bereich (12b) des Spikekörpers (12) bündig ineinander übergehen, und
wobei ein Fuß-Durchmesser (Dc) des Fußteils (13) größer ist als der untere Durchmesser (Dd), den der Spikekörper (12) in seinem unteren Bereich (12a) einnimmt.

13. Verfahren zum Herstellen eines Fahrzeugluftreifens (1) mit mehreren Spikes (2), insbesondere eines Fahrzeugluftreifens (1) gemäß einem der vorhergehenden Ansprüche, mit mindestens den folgenden Schritten:
- Bereitstellen eines Fahrzeugluftreifens (1) mit einem Laufstreifen (1a) und mehreren in den Laufstreifen (1a) eingebrachten Spikelöchern (3) (ST0);
- Bereitstellen oder Herstellen von mehreren metallischen Hülsenkörpern (9) (ST1), die jeweils zumindest einen unterer Bereich (12a) eines Spikekörpers (12) des jeweiligen Spikes (2) mit ausbilden und die jeweils in ein Fußteil (13) mit einer Aufweitung (14) übergehen;
- Einfüllen oder Einbringen eines Gummikörpers (10) in den jeweiligen Hülsenkörper (9) (ST2) derartig, dass der jeweilige Hülsenkörper (9) zumindest einen unteren Bereich (10a) des Gummikörpers (10) umgibt oder aufnimmt, um den unteren Bereich (12a) des Spikekörpers (12) des jeweiligen Spikes (2) auszubilden,
- Einbringen oder Einbetten eines Pins (5) in den Spikekörper (12) des jeweiligen Spikes (2) (ST3), wobei der Pin (5) mit einem freien Ende (5a) in der Längsrichtung (X) aus dem Spikekörper (12) des jeweiligen Spikes (2) herausragt;
- Einbringen oder Installieren des jeweiligen Spikes (2) mit dem Spikekörper (12) in das jeweilige Spikeloch (3) (ST5) derartig, dass das freie Ende (5a) des Pins (5) aus dem Laufstreifen (1a) hervorsteht.

14. Verfahren nach Anspruch 13,
**dadurch gekennzeichnet, dass**
der Pin (5) mit einem Haftvermittler (4) beschichtet wird, bevor dieser in den Spikekörper (12) des jeweiligen Spikes (2) eingebracht oder eingebettet wird, und/oder
der jeweilige metallische Hülsenkörper (9) innenseitig mit einem Haftvermittler (4) beschichtet wird, bevor der Gummikörper (10) in den jeweiligen Hülsenkörper (9) eingefüllt oder eingebracht wird, und/oder
der Spikekörper (12) außenseitig zumindest teilweise mit einem Haftvermittler (4) beschichtet wird, bevor der Spike (2) in dem Spikeloch (2) eingebracht oder installiert wird,
so dass bei einer nachträglichen Wärmebehandlung des jeweils eingebrachten oder installierten Spikes (2) (ST6) der Haftvermittler (4) an dem Pin (5) und/oder an dem metallischen Hülsenkörper (9) und/oder an dem Spikekörper (12) aktiviert wird und eine chemische Verbindung zwischen dem Pin (5) und dem Spikekörper (12) und/oder zwischen dem jeweiligen metallischen Hülsenkörper (9) und dem Gummikörper (10) und/oder zwischen dem Spikekörper (12) und dem Laufstreifen (1a) ausgebildet wird.

15. Verfahren nach Anspruch 13 oder 14,
**dadurch gekennzeichnet, dass**
das Einfüllen oder Einbringen des Gummikörpers (10) in den jeweiligen Hülsenkörper (9) (ST2) derartig erfolgt, dass in dem Gummikörper (10) eine zentrale Durchgangsöffnung (10d) gelassen wird oder eine zentrale Durchgangsöffnung (10d) nachträglich in den Gummikörper (10) eingebracht wird, und ein Schaft (7) des Pins (5) so durch diese zentrale Durchgangsöffnung (10d) gesteckt wird, dass das freie Ende (5a) des Pins (5) oberseitig aus der zentralen Durchgangsöffnung (10d) herausragt; oder
der Pin (5) vor dem Einfüllen oder Einbringen des Gummikörpers (10) in den jeweiligen Hülsenkörper (9) an dem Hülsenkörper (9) angeordnet wird, so dass sich der eingefüllte oder eingebrachte Gummikörper (10) um den Schaft (7) des Pins (5) legt und sich dadurch die zentrale Durchgangsöffnung (10d) ausbildet, in der der Pin (5) derartig positioniert ist, dass das freie Ende (5a) des Pins (5) oberseitig aus der zentralen Durchgangsöffnung (10d) herausragt.

16. Verfahren nach Anspruch einem der Ansprüche 13 bis 15,
**dadurch gekennzeichnet, dass**
das Einfüllen oder Einbringen des Gummikörpers (10) in den jeweiligen Hülsenkörper (9) (ST2) derartig erfolgt, dass zumindest der untere Bereich (10a) des Gummikörpers (10) in einem Innenraum (9a) des Hülsenkörpers (9), der seitlich durch eine Wandung (9b) des Hülsenkörpers (9) und nach unten hin von einem Boden (8) des Hülsenkörpers (9) begrenzt ist, angeordnet ist.
